# EUROPÄISCHE PATENTSCHRIFT

(11) **EP 0 861 169 B1**
(45) Veröffentlichungstag und Bekanntmachung des Hinweises auf die Patenterteilung: **05.04.2000**
(21) Anmeldenummer: 96939878.3
(22) Anmeldetag: 21.11.1996
(51) Int. Cl.: B60R 16/02

(54) **EINRICHTUNG ZUR LEITUNGSGEBUNDENEN, UNI- ODER BIDIREKTIONALEN ÜBERTRAGUNG VON ELEKTRISCHEN SIGNALEN ZU EINEM LENKRAD EINES FAHRZEUGES**
MEANS FOR GUIDED, UNIDIRECTIONAL OR BI-DIRECTIONAL TRANSMISSION OF ELECTRICAL SIGNALS TO A VEHICLE STEERING WHEEL
DISPOSITIF POUR LA TRANSMISSION GUIDEE UNIDIRECTIONNELLE OU BIDIRECTIONNELLE DE SIGNAUX ELECTRIQUES AU VOLANT DE DIRECTION D'UN VEHICULE

(30) Priorität: 22.11.1995 DE 19543522
(43) Veröffentlichungstag der Anmeldung: 02.09.1998
(73) Patentinhaber: AMI DODUCO GmbH, 75181 Pforzheim (DE)
(72) Erfinder: SCHULZE, Gunter, Lothar, D-75228 Ispringen (DE)
(74) Vertreter: Leitner, Waldemar, Dr. techn.
(86) Internationale Anmeldenummer: EP9605136
(87) Internationale Veröffentlichungsnummer: WO9718974

(56) Entgegenhaltungen:
- EP-A- 0 183 580
- EP-A- 0 520 535
- DE-A- 2 433 555
- DE-A- 4 005 396

## Beschreibung

Die Erfindung betrifft eine Einrichtung zur leitungsgebundenen, uni- oder bidirektionalen Übertragung von elektrischen Signalen, insbesondere von Schwachstromsignalen oder elektrischer Energie zwischen einem primärseitigen Modul und einem in einem Lenkrad eines Fahrzeugs integrierten sekundärseitigen Modul über eine Zweidrahtleitung, wobei für eine Trennbarkeit des primärseitigen und des sekundärseitigen Moduls die Einrichtung die primärseitige Zweidrahtleitung und die sekundärseitige Zweidrahtleitung durch ein primärseitiges bzw. sekundärseitiges Wicklungselement abgeschlossen sind, welche transformatorisch über einen Luftspalt miteinander koppelbar sind, wobei das primärseitige Wicklungselement in einem primärseitigen Schalenkern aufgenommen ist, der eine zentrale Öffnung zum Durchtritt einer das Lenkrad tragenden Lenksäule aufweist und im wesentlichen rotationssymmetrisch zu einer Symmetrieachse dieser zentralen Öffnung ausgebildet ist, wobei das primärseitige Wicklungselement und das sekundärseitige Wicklungselement als Ringspule ausgebildet sind, wobei das sekundärseitige Wicklungselement konzentrisch zum primärseitigen Wicklungselement angeordnet ist, und wobei die beiden einander gegenüberliegenden, durch den Luftspalt getrennten Wicklungselemente in einem von dem primärseitigen Schalenkern und dem sekundärseitigen Schalenkern begrenzten, gemeinsamen Aufnahmeraum aufgenommen sind, so daß durch die zusammenwirkenden Schalenkerne eine Abschirmung der Streufelder der beiden Wicklungselemente und somit des Streufeldes der Verbindungseinheit erzielbar ist.

Eine derartige Einrichtung ist aus der DE-A-44 04 816 bekannt.

Aus der DE-A1 43 22 811 ist eine Einrichtung zur Übertragung von elektrischen Signalen zwischen dem primärseitigen Modul und einem sekundärseitigen Modul über eine Zweidrahtleitung bekannt, bei der vorgesehen ist, daß für eine Trennbarkeit des primärseitigen und des sekundärseitigen Moduls der Einrichtung die primärseitige Zweidrahtleitung ohne sekundärseitige Zweidrahtleitung durch ein primärseitiges bzw. ein sekundärseitiges Wicklungselement abgeschlossen sind, welche über einen Transformatorkern transformatorisch miteinander koppelbar sind. Diese Einrichtung wird zum Beispiel dazu eingesetzt, um Steuersignale für elektrische Verbraucher und NF-Signale für Lautsprecher, die in einer Fahrzeugtür angeordnet sind, von einem außerhalb der Tür vorgesehenen Steuergerät über eine gemeinsame Datenleitung und den Steckverbinder an ein Türmodul zu übertragen. Hierbei ist vorgesehen, daß das die Tür mit dem Rahmen des Kraftfahrzeugs verbindende Drehgelenk als Transformator ausgebildet ist, dessen Primärwicklung Bestandteil der einen Gelenkhälfte und dessen Sekundärwicklung Bestandteil der anderen Gelenkhälfte ist.

Eine derartige Konstruktion - Übertragung der Signale über ein als Transformator ausgebildetes Drehgelenk einse Türscharniers ist aber dann nicht anwendbar. wenn elektrische Signale von einem ortsfesten Bauteil zu einem um eine Achse drehbares Bauteil übertragen werden soll, wie es zum Beispiel dann der Fall ist. wenn elektrische Signale von einer in der Fahrzeugkarosserie angeordneten Modul zu dem Lenkrad des Fahrzeuges übertragen werden soll. Als Beispiele für eine derartige Konstellation soll an dieser Stelle die Übertragung von Leistungs- und/oder Steuersignalen zu einem im Lenkrad integrierten Airbag angeführt werden. Außerdem ist hierbei problematisch, daß bei der bekannten Einrichtung Streufelder auftreten können, die einen negativen Einfluß auf die im Lenkrad integrierten Module ausüben und ggf. zu einer Auslösung des im Lenkrad integrierten Airbags führen können.

Aus der DE-A-24 33 555 ist eine berührungslose Zündimpuls Übertragung für Airbags bekannt, bei der zur induktiven Übertragung der zur Auslösung des Airbags benötigten elektrischen Energie von feststehenden auf drehbare Fahrzeugteile vorgesehen ist, daß eine fest mit einer Lenksäule verbundene Primärspule und eine fest mit einem Lenkrad oder einer Lenkspindel verbundene und damit drehbar gegenüber der Lenksäule angeordnete Sekundärspule koaxial angeordnet sind. Hierbei ist vorgesehen, daß die fest mit der Lenksäule verbundene Primärspule von einem kreisförmigen Spulenkörper umgeben ist, der einen einzig und allein die Primärspule aufnehmenden Aufnahmeraum ausbildet. An dem Spulenkörper der Primärspule schließt sich in radialer Richtung - von außen nach innen gesehen - die durch einen Luftspalt von dem Spulenkörper der Primärspule getrennte Sekundärspule an, die in einem Spulenkörper aufgenommen ist, der an der Lenkradnabe befestigt ist.

Eine derartige Ausbildung soll nach den in der oben genannten Druckschrift enthaltenen Angaben keine besonderen Ansprüche an die Fertigungsgenauigkeit der Spulen stellen, und der Luftspalt an den Spulen kann groß genug sein, um bei Montagetoleranzen am Lenksystem keine Probleme aufzuwerfen. Dies soll auch für die axiale Verschiebung der Spulen zueinander gelten, wobei die Windungszahlen und Drahtquerschnitte ein sehr geringes Bauvolumen ermöglichen sollen.

Eine derartige über keine Abschirmung verfügende Anordnung besitzt wiederum den Nachteil, daß hierbei störende Streufelder auftreten können, die - wie bereits oben erwähnt - einen negativen Einfluß auf die im Lenkrad integrierten Module ausüben und ggf. zu einer unerwünschten Auslösung des im Lenkrad integrierten Airbags führen können.

Es ist daher Aufgabe der Erfindung, eine Einrichtung der eingangs genannten Art derart weiterzuentwickeln, daß sie auch zur Übertragung von elektrischen Signalen zu in einem Lenkrad eines Fahrzeuges aufgenommenen Modulen einsetzbar ist.

Diese Aufgabe wird erfindungsgemäß dadurch gelöst, daß der primärseitige Schalenkern zumindest ein die zentrale Öffnung umgebendes Grundelement und zumindest ein von diesem abstehendes Wandelement aufweist, und daß das primärseitige Wicklungselement am Wandelement oder am Grundelement befestigbar ist, daß der sekundärseitige Schalenkern außer dem Grundelement und dem Wandelement ein zweites Wandelement aufweist, daß der primärseitige Schalenkern zusätzlich zu dem Grundelement und dem Wandelement ein zweites Wandelement aufweist, und daß durch das Grundelement und die beiden Wandelemente des primärseitigen Schalenkerns der Aufnahmeraum für die Wicklungselemente ausbildbar ist und daß der sekundärseitige Schalenkern zumindest ein Grundelement und zumindest ein von diesem abstehendes Wandelement aufweist, und daß das sekundärseitige Wicklungselement am Wandelement und/oder am Grundelement befestigbar ist.

Vorteilhafte Weiterbildungen der Erfindung ergeben sich aus den Unteransprüchen.

Weitere Einzelheiten und Vorteile der Erfindung sind den beiden Ausführungsbeispielen zu entnehmen, die im folgenden anhand der Figuren beschrieben werden. Es zeigen:
- Figur 1: einen Längsschnitt durch ein erstes Ausführungsbeispiel der Erfindung,
und
- Figur 2: einen Längsschnitt durch ein zweites Ausführungsbeispiel der Erfindung.

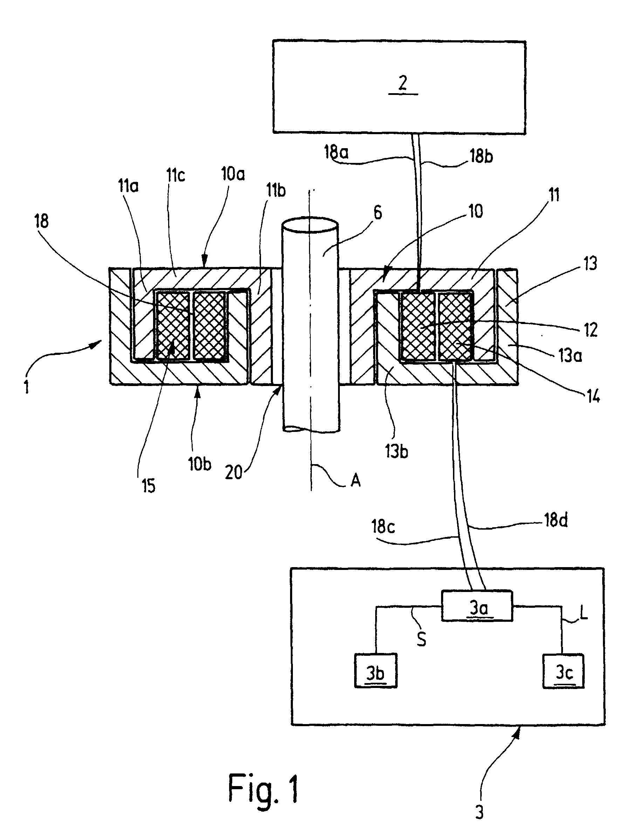

In Figur 1 ist nun schematisch der prinzipielle Aufbau eines ersten Ausführungsbeispieles einer Einrichtung 1 dargestellt, welche sich in ein primärseitiges Modul 2 und ein sekundärseitiges Modul 3 gliedert, wobei diese Module 2, 3 durch eine nachstehend detailliert beschriebene Verbindungseinheit 10 trennbar miteinander verbindbar sind. Die Verbindungseinheit 10 erlaubt hierbei eine uni- oder bidirektionale Übertragung von elektrischen Signalen, insbesondere von Schwachstromsignalen, zwischen den beiden Modulen 2, 3. Diese Module 2, 3 können auf unterschiedliche Art und Weise ausgebildet sein, wobei bezüglich der Ausbildung dieser Module 2, 3 exemplarisch auf die DE-OS 43 22 811 verwiesen wird, auf die zur Vermeidung von Wiederholungen explizit Bezug genommen wird und deren technische Lehre durch diese Bezugnahme in die nachfolgende Beschreibung einbezogen werden soll.

In dem hier beschriebenen Fall einer trennbaren Verbindung zwischen einem das primärseitige Modul 2 aufnehmenden Lenkeraufbaus eines nicht näher dargestellten Fahrzeuges und einem das sekundärseitige Modul 3 aufnehmenden Lenkrades ist z. B. vorgesehen, daß das primärseitige Modul 2 zum eine Steuereinheit für einen im primärseitigen Modul 3 integrierten Airbag enthält, so daß vom primärseitigen Modul 2 zum sekundärseitigen Modul 3 durch die Verbindungseinheit 10 Steuersignale übertragen werden, die im Kollisionsfall eine Auslösung des Airbags bewirken. Ebenfalls ist beispielhafterweise vorgesehen, daß über die Verbindungseinheit 10 elektrische Leistung transportierende Signale übertragen werden.

Die bereits oben mehrfach angesprochene Verbindungseinheit 10 der Einrichtung 1 weist einen primärseitigen Schalenkern 11, der eine zentrale Durchtrittsöffnung 20 für eine Lenksäule 6 des Fahrzeugs aufweist, auf. Im Schalenkern 11 ist ein primärseitiges Wicklungselement 12 angeordnet, welches mit dem primärseitigen Modul 2 über eine Zweidrahtleitung 18a, 18b verbunden ist. Der primärseitige Schalenkern 11 ist hierbei rotationssymmetrisch zu der Mittelachse A der Verbindungseinheit 10 ausgebildet und weist zwei umlaufende Wandelemente 11a, 11b auf, die sich im wesentlichen orthogonal zu einem Grundelement 11c des primärseitigen Schalenkerns 11 erstrecken. Ein durch die Wandelemente 11a, 11b und das Grundelement 11 c begrenzter Aufnahmeraum 15 dient zur Aufnahme des als Ringspule ausgebildeten primärseitigen Wicklungselement 11, welches - wie aus Figur 1 ersichtlich ist - mit dem äußeren Wandelement 11a und/oder dem Grundelement 11c des primärseitigen Schalenkerns 11 verbunden ist.

Ein sekundärseitiger Teil 10b der Verbindungseinheit 10 wird durch einen sekundärseitigen Schalenkern 13 und das sekundärseitige Wicklungselement 14 ausgebildet, welches über eine weitere Zweidrahtleitung 18c, 18d mit dem sekundärseitigen Modul 3 verbunden ist. Die beiden durch einen Luftspalt 18 voneinander getrennten Wicklungselemente 12 und 14 bilden eine leicht trennbare, induktive Kopplung der beiden Module 2, 3 aus, durch die eine uni- oder bidirektionale Übertragung von elektrischen Signalen ermöglicht wird.

Der sekundärseitige Schalenkern 13 ist wiederum rotationssymmetrisch zur Mittelachse A der Verbindungseinheit 10 ausgebildet und weist zwei Wandelemente 13a und 13b auf, die sich im wesentlichen orthogonal zum Grundelement 13c des sekundärseitigen Schalenkerns erstrecken. Wie aus Figur 1 ersichtlich ist, ist die Ausbildung und Anordnung der Wandelemente 13a und 13b des sekundärseitigen Schalenkerns 13 derart gewählt, daß das innere Wandelement 13b des sekundärseitigen Schalenkerns 13 in dem durch die Wandelemente 11a, 11b des primärseitigen Schalenkerns gebildeten Aufnahmeraums 15 aufnehmbar ist, während das äußere Wandelement 13a des sekundärseitigen Schalenkerns 13 derart angeordnet und ausgebildet ist, daß es in radialer Richtung gesehen außerhalb des äußeren Wandelements 11a des primärseitigen Schalenkerns liegt.

Eine derartige Anordnung und Ausbildung der beiden Schalenkerne 11, 13 der Verbindungseinheit 10 besitzt den Vorteil, daß die aus dem primärseitigen Teil 10a und dem sekundärseitigen Teil 10b bestehende Verbindungseinheit 10 in besonders einfacher Art und Weise leicht trennbar ist und eine induktive Kopplung für die beiden Module 2, 3 der Einrichtung 1 ausbildet, die besonders einfach und ohne Einhaltung von engen Montagetoleranzen zu montieren ist: Nachdem zuerst der primärseitige Teil 10a der Verbindungseinheit 10 drehfest mit dem Lenksäulenaufbau verbunden und über die Zweidrahtleitungen 18a, 18b am primärseitigen Modul 2 angeschossen wurde, und nachdem das sekundärseitige Teil 10b der Verbindungseinheit 10 drehfest mit dem Lenkrad verbunden und über die weiteren Zweidrahtleitungen 18c, 18d am sekundärseitigen Modul 3 angeschossen wurde, ist es durch ein einfaches Aufstecken des Lenkrads auf die Lenksäule 6 möglich, die induktive Kopplung zwischen den beiden Modulen 2, 3 über die konzentrisch zur Mittelachse A angeordneten, in den Schalenkernen 11, 13 aufgenommenen Wicklungselementen 12, 14 herzustellen. Die "Kapselung" der beiden Wicklungselemente 12, 14 in dem durch die Grundelemente 11c, 13c durch die beiden Wandelemente 11a, 13b und 11b, 13b begrenzten Aufnahmeraums 15 bewirkt eine besonders gute Abschirmung der Streufelder der beiden Wicklungselemente 12, 14, und somit des Streufeldes der Verbindungseinheit 10, so daß die beschriebene Verbindungseinheit 10 unkritisch in Hinsicht auf ihre EMV-Verträglichkeit ist.

Da es die beschriebene Verbindungseinheit 10 in vorteilhafter Art und Weise erlaubt, sowohl Schwachstromsignale, insbesondere Steuerungssignale, als auch Leistungssignale parallel zu übertragen, ist in dem sekundärseitigen Modul 3 vorteilhafterweise ein Signaltrennelement 3a vorgesehen, welches das übertragene Gesamtsignal in einen Leistungsanteil L und einen Signalanteil S aufspaltet, die dann getrennt zu einer Signalverarbeitungseinheit 3a, z. B. der Steuerelektronik eines Airbags, bzw. zu einer Leistungseinheit 3b, z. B. dem Energieteil des Airbags, geleitet werden.

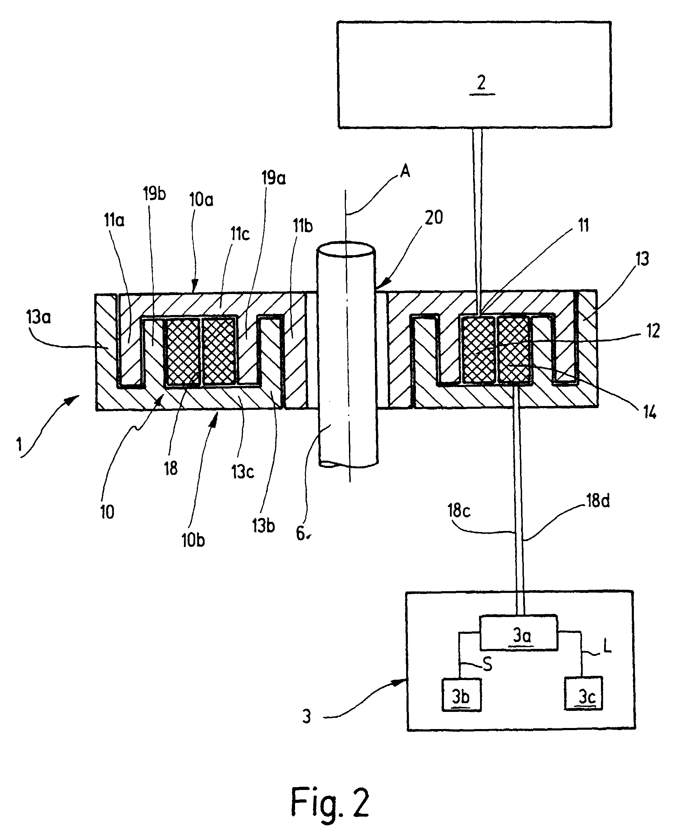

In Figur 2 ist nun ein zweites Ausführungsbeispiel einer Verbindungseinheit 10' zur trennbaren, induktiven Kopplung eines primärseitigen Modul 2 und eines sekundärseitigen Modul 3 beschrieben, welche weitgehend ähnlich mit der des ersten Ausführungsbeispiels ist, so daß gleiche oder einander entsprechende Teile mit gleichen Bezugszeichen versehen werden können und nicht mehr näher beschrieben werden müssen.

Der wesentliche Unterschied zwischen den beiden Ausführungsbeispielen besteht darin, daß die Verbindungseinheit 10' nicht einen einfachen Luftspalt 18 wie in der Verbindungseinheit 10 des ersten Ausführungsbeispiels besitzt, sondern daß zur Minimierung des Streufelds der Verbindungseinheit 10' ein Labyrinth-Luftspalt 18' vorgesehen ist. Dieser Labyrinth-Luftspalt wird in besonders einfacher Art und Weise dadurch realisiert, daß zumindest einer der beiden Schalenkerne 11, 13 ein weiteres umlaufendes Wandelement 19a, 19b aufweist, welches in radialer Richtung an die durch die beiden Wicklungseinheiten 12, 14 ausgebildeten Transformatorkern 14 anschließt. In dem in Figur 2 gezeigten Ausführungsbeispiel sind zwei weitere Wandelemete 19a, 19b vorgesehen, wobei das erste Wandelement 19a des primärseitigen Schalenkerns 11 derart vom inneren Wandelement 11b beabstandet ist, daß das innere Wandelement 13b des sekundärseitigen Schalenkerns 13 in den durch die beiden Wandelemente 11b, 19a begrenzten Hohlraum eintauchen kann. In entsprechender Art und Weise ist das weitere Wandelement 19b des sekundärseitigen Schalenkerns 13 derart angeordnet, daß das äußere Wandelement 11a des primärseitigen Schalenkerns 11a in einen durch das weitere Wandelement 19b und das äußere Wandelement 13a des sekundärseitigen Schalenkerns 13 begrenzten Raum in montiertem Zustand der Verbindungseinheit 10' eintaucht.

## Patentansprüche

1. Einrichtung zur leitungsgebundenen, uni- oder bidirektionalen Übertragung von elektrischen Signalen, insbesondere von Schwachstromsignalen oder elektrischer Energie, zwischen einem primärseitigen Modul (2) und einem in einem Lenkrad eines Fahrzeugs integrierten sekundärseitigen Modul (3) über eine Zweidrahtleitung (18a, 18b; 18c, 18d), wobei für eine Trennbarkeit des primärseitigen (2) und des sekundärseitigen Moduls (3) die Einrichtung (1) die primärseitige Zweidrahtleitung (18a, 18b) und die sekundärseitige Zweidrahtleitung (18c, 18d) durch ein primärseitiges (12) bzw. sekundärseitiges Wicklungselement (14) abgeschlossen sind, welche transformatorisch über einen Luftspalt (18; 18') miteinander koppelbar sind, wobei das primärseitige Wicklungselement (11) in einem primärseitigen Schalenkern (11) aufgenommen ist, der eine zentrale Öffnung (20) zum Durchtritt einer das Lenkrad tragenden Lenksäule aufweist und im wesentlichen rotationssymmetrisch zu einer Symmetrieachse (A) dieser zentralen Öffnung (20) ausgebildet ist, wobei das primärseitige Wicklungselement (12) und das sekundärseitige Wicklungselement (14) als Ringspule ausgebildet sind, wobei das sekundärseitige Wicklungselement (14) konzentrisch zum primärseitigen Wicklungselement (12) angeordnet ist, und wobei die beiden einander gegenüberliegenden. durch den Luftspalt (18, 18') getrennten Wicklungselemente (12, 14) in einem von dem primärseitigen Schalenkern (11) und dem sekundärseitigen Schalenkern (13) begrenzten, gemeinsamen Aufnahmeraum (15) aufgenommen sind, so daß durch die zusammenwirkenden Schalenkerne (11, 13) eine Abschirmung der Streufelder der beiden Wicklungselemente (12, 14) und somit des Streufeldes der Verbindungseinheit (10) erzielbar ist, dadurch gekennzeichnet, daß der primärseitige Schalenkern (11) zumindest ein die zentrale Öffnung (20) umgebendes Grundelement (11c) und zumindest ein von diesem abstehendes Wandelement (11a, 11b) aufweist, und daß das primärseitige Wicklungselement (12) am Wandelement (11a) oder am Grundelement (11c) befestigbar ist, daß der sekundärseitige Schalenkern (13) außer dem Grundelement (13c) und dem Wandelement (13b) ein zweites Wandelement (13a) aufweist, daß der primärseitige Schalenkern (11) zusätzlich zu dem Grundelement (11c) und dem Wandelement (11a) ein zweites Wandelement (11b) aufweist, und daß durch das Grundelement (11c) und die beiden Wandelemente (11a, 11b) des primärseitigen Schalenkerns (11) der Aufnahmeraum (15) für die Wicklungselemente (12, 14) ausbildbar ist und daß der sekundärseitige Schalenkern (13) zumindest ein Grundelement (13c) und zumindest ein von diesem (13c) abstehendes Wandelement (13b) aufweist, und daß das sekundärseitige Wicklungselement (14) am Wandelement (13b) und/oder am Grundelement (13c) befestigbar ist.

2. Einrichtung nach Anspruch 1, dadurch gekennzeichnet, daß zumindest ein Wandelement (13a, 13b) des sekundärseitigen Schalenkems (13) in montiertem Zustand der Einrichtung (1) in den durch die Elemente (11a-11c) des primärseitigen Schalenkerns (11) begrenzten Aufnahmeraum (15) eintritt.

3. Einrichtung nach einem der vorangehenden Ansprüche, dadurch gekennzeichnet, daß sich das äußere Wandelement (11a; 11b) eines der beiden Schalenkerne (11, 13) in radialer Richtung an das äußere Wandelement (11 a, 11 b) des anderen Schalenkern (11, 13) anschließt.

4. Einrichtung nach einem der vorangehenden Ansprüche, dadurch gekennzeichnet, daß zumindest einer der beiden Schalenkerne (11, 13) ein von seinen Grundelementen (11c, 13c) abstehendes weiteres Wandelement (19a, 19b) aufweist.

5. Einrichtung nach Anspruch 4, dadurch gekennzeichnet, daß der erste Schalenkern (11) ein weiteres Wandelement (19b) aufweist, das von seinem inneren Wandelement (11b) derart beabstandet ist, daß in montiertem Zustand der Einrichtung (1) das innere Wandelement (13b) des sekundärseitigen Schalenkerns (13) in einen durch die beiden Wandelemente (11b, 13b) des primärseitigen Schalenkerns (11) begrenzten Raum aufnehmbar ist.

6. Einrichtung nach einem der Ansprüche 3 bis 5, dadurch gekennzeichnet, daß der sekundärseitige Schalenkern (13) ein weiteres Wandelement (19a) aufweist, das vom äußeren Wandelement (13a) derart beabstandet ist, daß in montiertem Zustand der Einrichtung (1) das äußere Wandelement (11 a) des sekundärseitigen Schalenkerns (11) in dem durch die beiden Wandelemente (13a, 19a) begrenzten Raum aufnehmbar ist.

7. Einrichtung nach einem der vorangehenden Ansprüche, dadurch gekennzeichnet, daß durch die Verbindungseinrichtung (10, 10') parallel Schwachstromsignale, insbesondere Steuersignale, und Leistungsignale übertragbar sind.

8. Einrichtung nach Anspruch 6, dadurch gekennzeichnet, daß das sekundärseitige Modul (3) ein Signaltrennelement (3a) aufweist, durch das ein von der Verbindungseinrichtung (10, 10') übertragenes Gesamtsignal in seinen Signalanteil (S) und seinen Leistungsanteil (L) aufspaltbar ist.

9. Einrichtung nach einem der Ansprüche 7 oder 8, dadurch gekennzeichnet, daß das sekundärseitige Modul eine Signalverarbeitungseinheit (3a) und/oder eine Leistungseinheit (3b) aufweist.

10. Einrichtung nach Anspruch 9, dadurch gekennzeichnet, daß die Signalverarbeitungseinheit (3a) als Steuerelektronik eines im Lenkrad integrierten Airbags und/oder die Leistungseinheit (3b) als Energieteil des Airbags ausgebildet ist.

11. Einrichtung nach einem der vorangehenden Ansprüche, dadurch gekennzeichnet, daß die beiden Schalenkerne (11, 13) gegeneinander um die Achse (6) drehbar sind.

12. Einrichtung nach Anspruch 11, dadurch gekennzeichnet, daß einer (11) der beiden Schalenkerne (11, 13) der Einrichtung (1) fest mit der Lenksäule (6) verbindbar ist.

## Claims

1. Device for guided, uni- or bidirectional transmission of electric signals, especially low-voltage signals or electrical energy, between a primary module (2) and a secondary module (3) integrated in a steering wheel of a vehicle by means of a two-wire line (18a, 18b; 18c, 18d), whereby for a separability of the primary (2) and the secondary module (3) of the device (1) the primary two-wire line (18a, 18b) and the secondary two-wire line (18c, 18d) are terminated by a primary (12) and a secondary winding element (14), which can be coupled with each other in the manner of a transformer by way of an air gap (18; 18'), whereby the primary winding element (11) is located in a primary shell-type core (11), which is provided with a central opening (20) for a steering column carrying the steering wheel and which is generally rotationally symmetric to an axis (A) of symmetry of this central opening (20), whereby the primary winding element (12) and the secondary winding element (14) are formed as a toroid, whereby the secondary winding element (14) is arranged concentrically to the primary winding element (12), and whereby the two winding elements (12, 14) located opposite to each other and separated by the air gap (18, 18') are arranged in a common receiving chamber (15) defined by the primary shell-type core (11) and the secondary shell-type core (13), so that by the co-acting shell-type cores (11, 13) a shielding of the stray fields of the two winding elements (12, 14) and therefore of the stray field of the connection unit (10) is achievable, **characterized in that** the primary shell-type core (11) comprises at least one base element (11c) surrounding the central opening (20) and at least one wall element (11a, 11b) projecting therefrom, and that the primary winding element (12) can be connected to the wall element (11a) or to the base element (11c), that the secondary shell-type core (13) comprises besides the base element (13c) and the wall element (13b) a second wall element (13a) that the primary shell-type core (11) in addition to the base element (11 c) and the wall element (11 a) comprises a second wall element (11b), and that the receiving chamber (15) for the winding elements (12, 14) can be formed by the base element (11 c) and the two wall elements (11 a, 11 b) of the primary shell-type core (11), and that the secondary shell-type core (13) comprises at least one base element (13c) and at least one wall element (13b) projecting therefrom, and that the secondary winding element (14) can be connected to the wall element (13b) and/or to the base element (13c).

2. The device according to claim 1, **characterized in that** at least one wall element (13a, 13b) of the secondary shell-type core (13) in the assembled state of the device (1) reaches into the receiving chamber (15) defined by the elements (11a-11c) of the primary shell-type core (11).

3. The device according to one of the afore-mentioned claims, **characterized in that** the outer wall element (11a, 11 b) of one of the two shell-type cores (11, 13) is in radial direction adjacent to the outer wall element (11a, 11 b) of the other shell-type core (11, 13).

4. The device according to one of the afore-mentioned claims, **characterized in that** at least one of the two shell-type cores (11, 13) comprises an additional wall element (19a, 19b) projecting from its base element (11c, 13c).

5. The device according to claim 4, **characterized in that** the first shell-type core (11) comprises an additional wall element (19b), which is spaced at a distance from its inner wall element (11 b) in a way that, in the assembled state of the device (1), the inner wall element (13b) of the secondary shell-type core (13) can be accommodated in a chamber which is defined by the two wall elements (11b, 13b) of the primary shell-type core (11).

6. The device according to one of the claims 3 to 5, **characterized in that** the secondary shell-type core (13) comprises an additional wall element (19a) which is spaced at a distance from the outer wall element (13a) in a way that, in the assembled state of the device (1), the outer wall element (11 a) of the secondary shell-type core (11) can be accommodated in the chamber defined by the two wall elements (13a, 19a).

7. The device according to one of the afore-mentioned claims, **characterized in that** low-voltage signals, especially control signals and power signals, can be transmitted concurrently by the connection unit (10, 10').

8. The device according to claim 6, **characterized in that** the secondary module (3) comprises a signal separation element (3a), by which a total signal transmitted by the connection unit (10, 10') is separable into its signal component (S) and its power component (L).

9. The device according to one of the claims 7 or 8, **characterized in that** the secondary module comprises a signal processing unit (3a) and/or a power unit (3b).

10. The device according to claim 9, **characterized in that** the signal processing unit (3a) is designed as control unit of an air bag integrated in the steering wheel and/or the power unit (3b) is designed as the power component of the air bag.

11. The device according to one of the afore-mentioned claims, **characterized in that** the two shell-type cores (11, 13) can be rotated with respect to each other around the axis (6).

12. The device according to claim 11, **characterized in that** one (11) of the two shell-type cores (11, 13) of the device (1) can be fixed to the steering column (6).

## Revendications

1. Dispositif destiné à la transmission par câble unidirectionnelle ou bidirectionnelle de signaux électriques, en particulier des signaux de courant basse tension ou d'énergie électrique, entre un module du côté primaire (2) et un module du côté secondaire (3) intégré dans le volant d'un véhicule, par l'intermédiaire d'une ligne à deux fils (18a, 18b ; 18c, 18d), dans lequel, pour pouvoir établir une séparation entre le module du côté primaire (2) et le module du côté secondaire (3), le dispositif (1), la ligne à deux fils du côté primaire (18a, 18b) et la ligne à deux fils du côté secondaire (18c, 18d) sont fermés par un élément de bobine primaire (12) et un élément de bobine secondaire (14), lesquels peuvent être couplés l'un avec l'autre par la voie d'un transformateur par l'intermédiaire d'un entrefer (18 ; 18'), l'élément de bobine primaire (12) étant logé dans un noyau en cuvette du côté primaire (11), qui est muni d'un orifice central (20) destiné au passage d'une colonne de direction supportant le volant et qui est conçu sensiblement par symétrie de rotation avec un axe de symétrie (A) dudit orifice central (20), l'élément de bobine primaire (12) et l'élément de bobine secondaire (14) étant conçus en forme de bobine annulaire, l'élément de bobine secondaire (14) étant disposé concentriquement par rapport à l'élément de bobine primaire (12), les deux éléments de bobine (12, 14) situés face à face et séparés par un entrefer (18, 18') étant logés dans un logement (15) commun délimité par le noyau en cuvette du côté primaire (11) et le noyau en cuvette du côté secondaire (13), de telle sorte que les noyaux en cuvette (11, 13) à action conjointe forment un écran face aux champs de dispersion des deux éléments de bobine (12, 14) et, de ce fait, au champ de dispersion de l'unité de liaison (10), caractérisé en ce que le noyau en cuvette du côté primaire (11) comporte au moins un élément de base (11c) qui entoure l'orifice central (20) et au moins un élément de paroi (11a, 11b) qui s'avance en saillie sur ledit élément de base, et en ce que l'élément de bobine primaire (12) peut être fixé contre l'élément de paroi (lla) ou contre l'élément de base (11c), en ce que le noyau en cuvette du côté secondaire (13) comporte, outre l'élément de base (13c) et l'élément de paroi (13b), un deuxième élément de paroi (13a), en ce que le noyau en cuvette du côté primaire (11) comporte, outre l'élément de base (11c) et l'élément de paroi (11a), un deuxième élément de paroi (11b), et en ce que le logement (15) réservé aux éléments de bobine (12, 14) peut être formé par l'élément de base (11c) et les deux éléments de paroi (11a, 11b) du noyau en cuvette du côté primaire (11) et en ce que le noyau en cuvette du côté secondaire (13) comporte au moins un élément de base (13c) et au moins un élément de paroi (13b) qui s'avance en saillie dudit élément de base (13c), et en ce que l'élément de bobine secondaire (14) peut être fixé contre l'élément de paroi (13b) et/ou contre l'élément de base (13c).

2. Dispositif selon la revendication 1, caractérisé en ce que, dans le dispositif (1) à l'état monté, au moins un élément de paroi (13a, 13b) du noyau en cuvette du côté secondaire (13) pénètre dans le logement (15) délimité par les éléments (11a à 11c) du noyau en cuvette du côté primaire (11).

3. Dispositif selon l'une quelconque des revendications précédentes, caractérisé en ce que l'élément de paroi extérieur (11a, llb) de l'un des deux noyaux en cuvette (11, 13) est juxtaposé dans le sens radial à l'élément de paroi extérieur (11a, llb) de l'autre noyau en cuvette (11, 13).

4. Dispositif selon l'une quelconque des revendications précédentes, caractérisé en ce qu'au moins l'un des deux noyaux en cuvette (11, 13) comporte un autre élément de paroi (19a, 19b) qui s'avance en saillie de son élément de base (11c, 13c).

5. Dispositif selon la revendication 4, caractérisé en ce que le premier noyau en cuvette (11) comporte un autre élément de paroi (19b) qui est situé à une distance donnée de son élément de paroi intérieur (11b), de telle sorte que, dans le dispositif (1) à l'état monté, l'élément de paroi intérieur (13b) du noyau en cuvette du côté secondaire (13) puisse être logé dans un logement délimité par les deux éléments de paroi (11b, 13b) du noyau en cuvette du côté primaire (11).

6. Dispositif selon l'une quelconque des revendications 3 à 5, caractérisé en ce que le noyau en cuvette du côté secondaire (13) comporte un autre élément de paroi (19a) qui est situé à une distance donnée de l'élément de paroi extérieur (13a), de telle sorte que, dans le dispositif (1) à l'état monté, l'élément de paroi extérieur (11a) du noyau en cuvette du côté primaire (11) peut être logé dans un logement délimité par les deux éléments de paroi (13a, 19a).

7. Dispositif selon l'une quelconque des revendications précédentes, caractérisé en ce que des signaux de courant basse tension parallèles, en particulier des signaux de commande, et des signaux de puissance peuvent être transmis par le dispositif de liaison (10, 10').

8. Dispositif selon la revendication 6, caractérisé en ce que le module du côté secondaire (3) comporte un élément de séparation des signaux (3a), par lequel un signal global transmis par le dispositif de liaison (10, 10') peut être divisé en une partie signal (S) et une partie puissance (L).

9. Dispositif selon la revendication 7 ou 8, caractérisé en ce que le module du côté secondaire est muni d'une unité de traitement du signal (3a) et/ou d'une unité de puissance (3b).

10. Dispositif selon la revendication 9, caractérisé en ce que l'unité de traitement du signal (3a) est conçue en forme de dispositif électronique de commande pour un coussin gonflable de sécurité intégré dans le volant et/ou l'unité de puissance (3b) est conçue en forme d'unité d'énergie pour le coussin gonflable de sécurité.

11. Dispositif selon l'une quelconque des revendications précédentes, caractérisé en ce que les deux noyaux en cuvette (11, 13) peuvent tourner dans le sens inverse l'un de l'autre autour de l'axe (6).

12. Dispositif selon la revendication 11, caractérisé en ce que l'un (11) des deux noyaux en cuvette (11, 13) du dispositif (1) peut être assemblé de manière inamovible avec la colonne de direction (6).
